# EUROPEAN PATENT SPECIFICATION

(11) **EP 3 356 249 B1**
(45) Date of publication and mention of the grant of the patent: **12.02.2020**
(21) Application number: 16794404.0
(22) Date of filing: 28.09.2016
(51) Int. Cl.: B65D 39/00, B27J 5/00, B29C 53/56

(54) **A CLOSING ELEMENT FOR CONTAINERS AND A PROCESS FOR MAKING SAID CLOSING ELEMENT**
VERSCHLUSSELEMENT FÜR BEHÄLTER UND VERFAHREN ZUR HERSTELLUNG DES BESAGTEN VERSCHLUSSELEMENTS
ÉLÉMENT DE FERMETURE POUR RÉCIPIENTS ET PROCÉDÉ DE FABRICATION DUDIT ÉLÉMENT DE FERMETURE

(30) Priority: 28.09.2015 CH 14032015
(43) Date of publication of application: 08.08.2018
(73) Proprietor: Bernasconi, Brunello, 6965 Cadro (CH)
(72) Inventor: BARCA, Andrea, CH-6929 Gravesano (CH); BERNASCONI, Brunello, 6965 Cadro (CH)
(74) Representative: Galassi, Alessandro
(86) International application number: PCT/IB2016/001381
(87) International publication number: WO 2017/055904

(56) References cited:
- WO-A2-2008/113608
- FR-A- 353 923
- FR-A- 824 595
- FR-A- 862 010

## Description

The present invention relates to a closing element, of a type adapted to close containers in general and in particular bottles, and a process for making the closing element. In particular the closing element can be a cap for bottles. Caps made of cork are known. Cork caps are used to ensure conservation of liquids, such as alcoholic drinks, for example wine. Caps of known type are made in a single piece of natural cork, or in agglomerated cork, made up of granules of cork held together by an adhesive material, and are also makeable with recycled or waste cork from the production of caps of natural cork. Caps made in a single piece of natural cork have the drawback of having a significant cost, as they can only be made starting from pieces of cork (panels) having sufficient thicknesses, and further have some known problems such as the possible release over time of contaminant substances among which the so called "red powders" and TCA, which can contaminate the product contained in the bottles. The agglomerated cork has a cost and quality that are lower than natural cork, and is used because of the high cost and insufficient availability of natural cork in amounts that can enable making of caps in a single piece. Caps made of agglomerated cork are however less valuable, also because aesthetically they are less pleasing, and are therefore unsuitable for high-quality products, such as fine wines, and further have very significant percentages of glue. These glues can in some cases in turn contain contaminant substances, and therefore a high presence of the glues can constitute a problem. It is known from patent application EP2136976 (WO2008/113608) a cap made by winding a cork sheet. The cap has one or more glue spots, or alternatively a layer of glue distributed only on a limited part of the cork sheet, with the sole objective of keeping the cap compact following the winding of the cork sheet, preventing unwinding thereof. The cap of EP2136976 offers an alternative solution to agglomerated cork caps, as it discloses a cap with a more pleasing appearance with respect to agglomerated caps, notwithstanding a cost which in any case is modest. This wound-sheet cap however has some drawbacks, among which the fact that it does not sufficiently guarantee the quality of the product contained in the bottle. Among the causes of such behaviour is the fact that the cap made according to the teachings of EP2136976 does not have gas seal characteristics, for example to air, that are sufficiently high and constant, and can over time be subject to penetrations, deformations and failure which lead to a decay in the performance of the cap and compromising the quality of the liquid contained (for example due to oxidation of the wine). EP2136976, in figure 1b, illustrates a spotted gluing (1"'), which confirms that the aim of EP2136976 does not consider the insulating aspect between the layers, but considers only 1'" as the gluing. The problem relating to the penetration of liquids and gases over time is never mentioned in patent EP2136976. An excessive or accelerated penetration of liquids leads to leakages and contamination. This problem can compromise the use of the product constructed according to EP2136976 on the market. The graph illustrated in figure 12 shows the results of some tests carried out in the laboratory for comparing the behaviour of products constructed according to EP2136976 and those of products made according to the present patent application. Already after 10 months the products according to EP2136976 demonstrated a penetration of coloured liquid of as much as 40mm, with leakages from the container (40mm is the average thickness of a cork cap for wine bottles), and therefore the performance of a cap made according to the teachings of EP2136976 is very different from and worse than those provided by a conventional cork cap in high-quality single-piece cork.

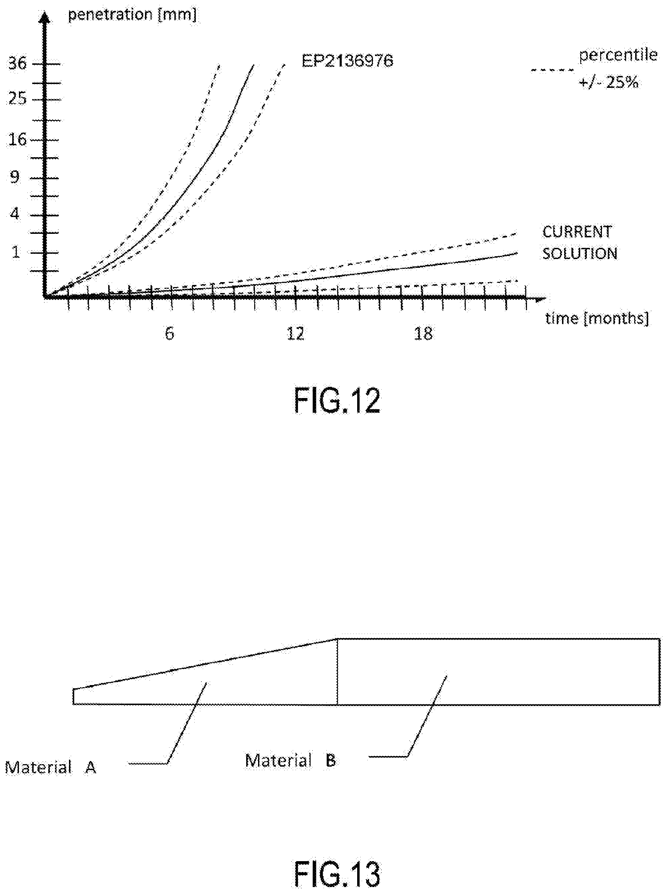

The penetration of gases is comparable to liquid penetration, but is much more rapid and has an even greater effect of deterioration on the contents. The penetration of gases into the containers leads to an excessive oxygenation, oxidation and/or contamination, partially or completely modifying the aspect of the contents (colour, clarity,...) consistency (viscosity, effervescence,...) and the taste-olfactory quality. International standards (ISO 9727-6 standards) require testing the sealing (penetration/leakage of liquid from the container) by applying, to the closing element, a liquid at the pressure of 1.2 bar. No penetration is acceptable. Laboratory tests of products made according to EP2136976 have demonstrated leakages already at 1.1 bar after a few minutes of testing. Thanks to the solution of the present application, it is possible to resist pressures of over 2 bar. Microscopic analysis has shown that the penetrations take place between the layers of rolled cork. The application of an insulating material ensures the necessary mechanical properties and the resistance to penetration of liquids and gases, possibly but not necessarily in combination with a gluing material. Patent EP2136976 does not consider these penetrations and does not suggest any solution or proof that ensures resistance to penetration of the liquids and gases over time. In general, a glue or adhesive material is expressly formulated for gluing surfaces to one another (for example porous surfaces such as paper, cardboard, cork,..) and it is not necessarily a material able to create a barrier or insulating effect (as, for example, are seals, plastic films with barrier effect, etc.). Adhesive materials or glues are not normally used as insulators, hydro-repellents or barriers, as normally these are materials formulated expressly to optimise the gluing or adhesive qualities thereof, and not the insulating qualities thereof, which can also be absent, poor or insufficient for applications of interest. The cap of EP2136976 further has the drawback of being constructed at constant pressure, limiting the variations as a function of the container, of the liquid and the sheet material. A further drawback of EP2136976 is the possibility of peeling of the external rings of the cap during the pressurised bottling, an aspect not considered and under-evaluated in EP2136976. In the light of the above, a principal aim of the present invention is to resolve one or more of the problems found in the prior art. An aim of the present invention is to improve the conservation of alcoholic substances such as wines. A further aim of the present invention is to provide a closing element which prevents deterioration of the contents of the bottles, in particular wine. A further aim of the invention consists in providing a closing element which provides an excellent seal. Another aim of the invention consists in providing a closing element which provides technical characteristics that are constant over time. A further aim of the present invention is to enable making caps of high quality by using parts of cork normally considered to be of lower quality than the traditional quality or indeed re-evaluating a waste material of the single-piece caps market, or caps used for fizzy wines such as sparkling wines, champagne, etc... A further aim of the present invention is to make available a process for making a closing element that is simple, economical and effective, while maintaining the qualitative aspect of a natural single-piece cap. These aims and others besides, which will emerge more clearly from the following description, are substantially attained by a closing element and a process for making a closing element according to what is expressed in one or more of the appended claims and/or the following aspects, taken alone or in any combination with one another or in combination with any one of the appended claims and/or in combination with any one of the further aspects or characteristics described in the following. In an aspect a closing element is provided for containers for liquids, in particular bottles, comprising at least a cork sheet having two main faces opposite one another and further comprising at least a layer of insulating material, increasing the impermeability to liquids and to air and/or gases, coupled to the cork sheet so as to at least partly cover at least one of said two main faces, the cork sheet and the layer of insulating material being rolled so as to define said cap by alternated winding of the cork sheet and the layer of insulating material, wherein the cork sheet comprises various types of cork, for example solid natural cork and agglomerated cork or micro-agglomerated cork and/or wherein a first portion of the cork sheet is made of agglomerated or micro-agglomerated cork and a second portion of the cork sheet is made of solid natural cork. In an aspect, the closing element for containers is a cap for bottles, in particular for wine bottles. In an aspect, the insulating material is deformable and the layer of insulating material is configured for at least partly filling empty spaces and/or for filling surface discontinuities present in the cork sheet or due to the winding method so as to make the cap impermeable to gases and/or air and to liquids or to increase the impermeability thereof to the gases and/or air and to liquids. In an aspect, a quantity of insulating material is used that is able to at least partly fill empty spaces and/or surface discontinuities present on the cork sheet or due to the winding method so as to make the cap impermeable to liquids and to air and/or to gases. In an aspect, the insulating material is organic. In an aspect, the insulating material is inorganic. In an aspect the mechanical winding of the cork sheet is secured by a partial and spotted gluing of the surfaces, preferably only at the external end thereof. In an aspect, the closing of the winding can be done mechanically, for example by sewing or another method. In an aspect, the insulating material is injected at the ends of the winding after carrying out the winding itself. In an aspect, the insulating material is modelled during the rolling step of the cork sheet under rolling pressure. In an aspect, the insulating material is pressed against the cork sheet and is modelled by the action of the pressure. In an aspect any combination of the geometries (denoted by 5A, 5B, 5C, 5D, but not only, in the figures) can occur with elements processed separately and then joined mechanically or with glues so as to create a single sheet and enabling the following work operations (for example the winding, etc...). A variant of this aspect is illustrated in figure 13.

According to further aspects, usable in combination with any one of the claims or the other indicated aspects, the insulator can have one or more of the following characteristics, and be:
- a hydro and/or oil repellent product;
- a product which prevents problems of infiltration through the natural and not-natural splits in the cork;
- a shield that penetrates and is fixed in the micro-porosities of the material, attaining a hydro-repellent effect without altering the chemical-physical and organoleptic characteristics;
- a water-repellent impregnating agent;
- a sealant;
- a hybrid elastic sealant and adhesive;
- a cold-applied self-adhesive tape for sealing and impermeabilising over joints and splits;
- an organic product or resins according to the production technology used or the desired specificities of the product;
- a hydrophilic material;
- a microporous but hydro-repellent material which prevents liquids and gases from penetrating internally of the closing element or the container;
- comprising biopolymers;
- a substance comparable to substances deriving from petrol processing starting from renewable resources; such as for example propanediol, butanediol, adipic acid, succinic acid and ethanol, from which various types of polyester are obtained (for example Poly butylene terephthalate (PBT) and polyethylene;
- a biodegradable foam (or comprising a plurality of biodegradable foams), constituted 100% by natural products, starting from PLA (polylactic acid), which can derive, but not only, from plants such as corn, wheat or beetroot, rich in natural sugar (dextrose);
- a surface filler;
- a film former.

In an aspect, a first portion of the cork sheet destined to constitute a central portion of the closing element, is made of agglomerated or micro-agglomerated cork and wherein a second portion of the cork sheet destined to constitute an external layer of the alternated winding is made of solid natural cork. In an aspect, the closing element has a substantially cylindrical conformation. In an aspect, the height of the closing element is substantially defined by the height of the cork sheet. In an aspect, said layer of insulating material is engaged on both faces of the cork sheet on at least 10% or at least 30% or at least 50% or at least 70% or at least 90% of the surface of each face of the cork sheet. In an aspect, said layer of insulating material is engaged on both faces of the cork sheet substantially over the whole surface of each face of the cork sheet. In an aspect, the closing element comprises a plurality of layers of insulating material. In an aspect, the cork sheet is interposed between two layers of insulating material. In an aspect, the layer of insulating material is impermeable and resistant to alcoholic solutions. In an aspect, an additional layer of glue is applied on at least an end of the layer of insulating material or on the whole surface of the insulating material. In an aspect, the closing element comprises one, two or more additional layers of glue applied on one or both the faces of the cork sheet or on both the layers of the insulating material engaged to the opposite faces of the cork sheet. In an aspect, at least an end of the cork sheet has a constant thickness. In an aspect, at least an end of the cork sheet has a thickness variable between 0.3 mm and 3.5 mm or between 0.5 mm and 3 mm. In an aspect, at least an end of the cork sheet has a thickness that is variable in a parallel direction to the longitudinal extension of the cork sheet perpendicularly to the height of the cork sheet and/or to the height of the closing element. In an aspect, both ends of the cork sheet have a thickness variable between 0.3 mm and 3.5 mm or between 0.5 mm and 3 mm. In an aspect, the cork sheet and the layer of insulating material are wound in a spiral shape. In an aspect, the closing element has a central core orientated in an opposite direction with respect to a main winding direction of the spiral. In an aspect, the closing element has a central core comprising one or more folds of the cork sheet and/or the layer of insulating material. In an aspect, the central folds are reciprocally orientated to form substantially an "S" shape. In an aspect, the closing element comprises a central core about which the cork sheet and the layer of insulating material are rolled, with or without glue. In an aspect, the central core is made of a plastic material. In an aspect, the central core is made of an organic or inorganic material. In an aspect the closing element is defined by a cork sheet and by a sheet of plastic material, reciprocally joined. In an aspect the closing element is defined by a sheet of plastic material constituting a central portion of the closing element and by the cork sheet constituting an external layer of the alternated winding. In an aspect, the closing element has a further layer of insulating and/or adhesive material arranged between the central core and the cork sheet. In an aspect, the closing element has a layer of glue between the central core and the cork sheet. In an aspect, the central core has, according to a transversal section of a longitudinal axis of the closing element, a circular or oval or elliptical conformation, or like conformations at least partly curved. In an aspect, the closing element is made so that the winding and/or pulling pressure of the sheet is controlled, constantly or variably depending on the constructional factors, along the winding diameter of the closing element. In an aspect, the winding and/or pulling pressure of the sheet is variable according to the type of liquid and/or the physical and/or chemical characteristics of the liquid contained in a container, in particular a bottle, to which the closing element is destined to be applied. In an aspect, a use of the closing element is included for closing bottles containing still or sparkling wines. In an aspect a process is included for making a closing element according to one or more of the preceding aspects and/or one or more of the appended claims, comprising:
- predisposing a cork sheet having two main faces opposite one another,
- applying a layer of insulating material, impermeable to gases and/or to air and to liquids, to the cork sheet so as to at least partly cover at least one of said two main faces of the cork sheet,
- rolling the cork sheet, with a controlled pressure, to define said closing element by means of an alternated winding of the cork sheet and the layer of insulating material, the layer of insulating material and the alternated winding being configured and predisposed to make the closing element impermeable to liquids and air and/or gases;
- match and rectify the closing element to the specific dimensions, by eliminating any irregularities or projections.

In an aspect, applying a layer of insulating material comprises spraying, atomising or spreading or applying the insulating material in the form of an adhesive sheet or applying by immersion coating. In an aspect, the process comprises cutting the rolled cork sheet for obtaining a plurality of caps. In an aspect, the cork sheet has a longitudinal extension comprised between 20 mm and 100 mm so as to obtain a single closing element by rolling of the cork sheet, or comprised between 20 mm and 10 m, so as to obtain, by cutting the wound roll of cork, a plurality of caps. In an aspect, the process comprises applying a layer of insulating material on both faces of the cork sheet. There now follows, by way of non-limiting example, a detailed description of one or more preferred embodiments of the invention, in which:
figure 1 illustrates a cork sheet to which a layer of insulating material is applied;
figure 2 illustrates a closing element according to an embodiment of the present invention obtained by rolling the cork sheet and the layer of insulating material of figure 1;
figures 3 and 4 illustrate a cork sheet to which a layer of insulating material and a layer of glue are applied;
figures 5a, 5b, 5c and 5d illustrate cork sheets having a different progression of the thickness along the longitudinal direction of the cork sheet;
figures 6a and 6b illustrate caps having different cross sections;
figure 7 illustrates a closing element according to an embodiment of the present invention;
figure 8 illustrates a cork sheet to which a layer of insulating material is applied with or without glue, another layer of cork and another layer of insulating material;
figure 9 illustrates a cork sheet rolled starting from which a plurality of caps can be made;
figures 10a and 10b illustrate a cork sheet comprising a first and a second portion in different types of cork;
figure 11 illustrates a closing element according to an embodiment of the present invention obtained starting from a cork sheet such as the one illustrated in figure 10b;
figure 12 illustrates a graph relative to comparative tests carried out between the solution of EP2136976 and a solution according to the present application;
figure 13 illustrates a further variant embodiment.

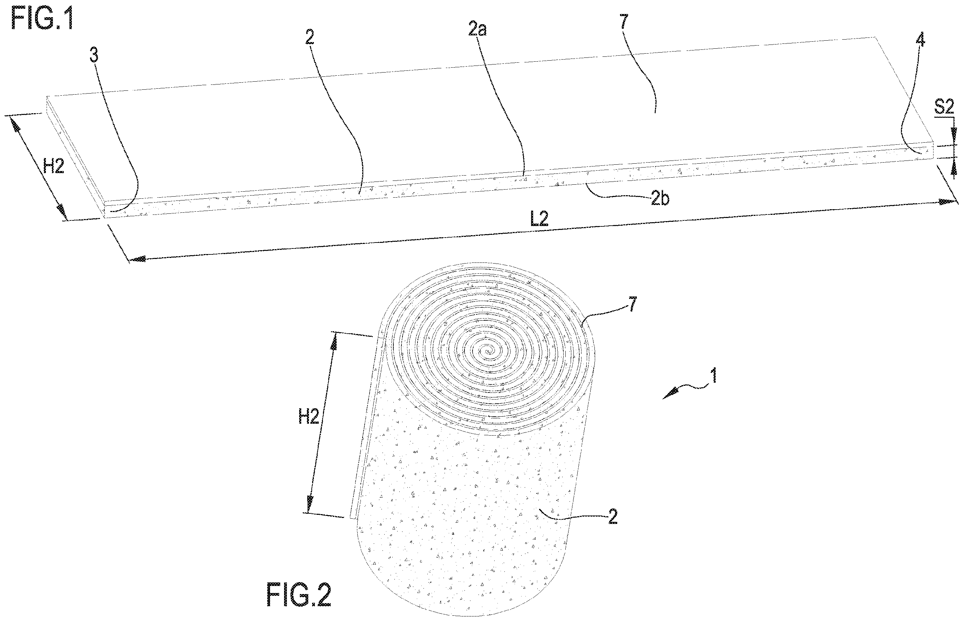

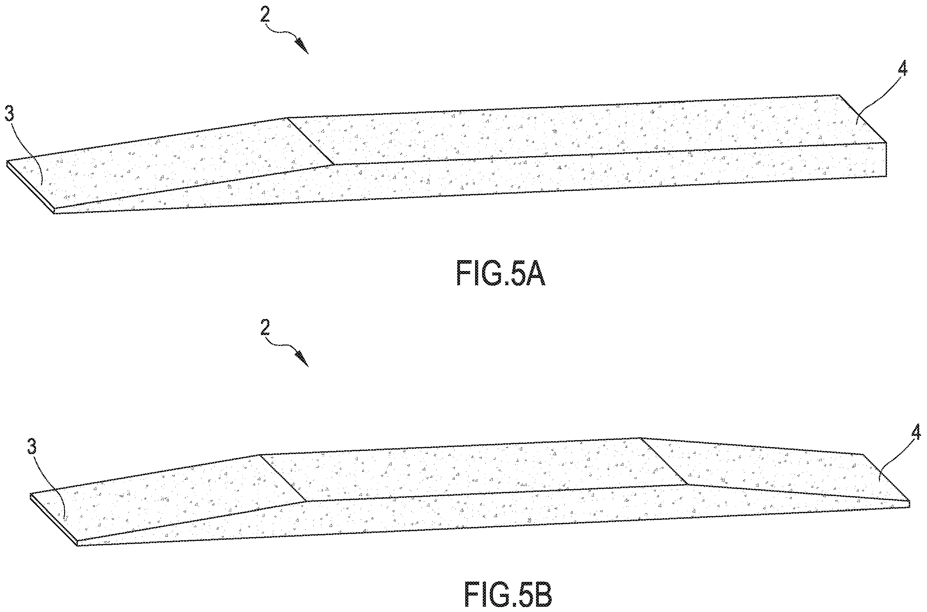

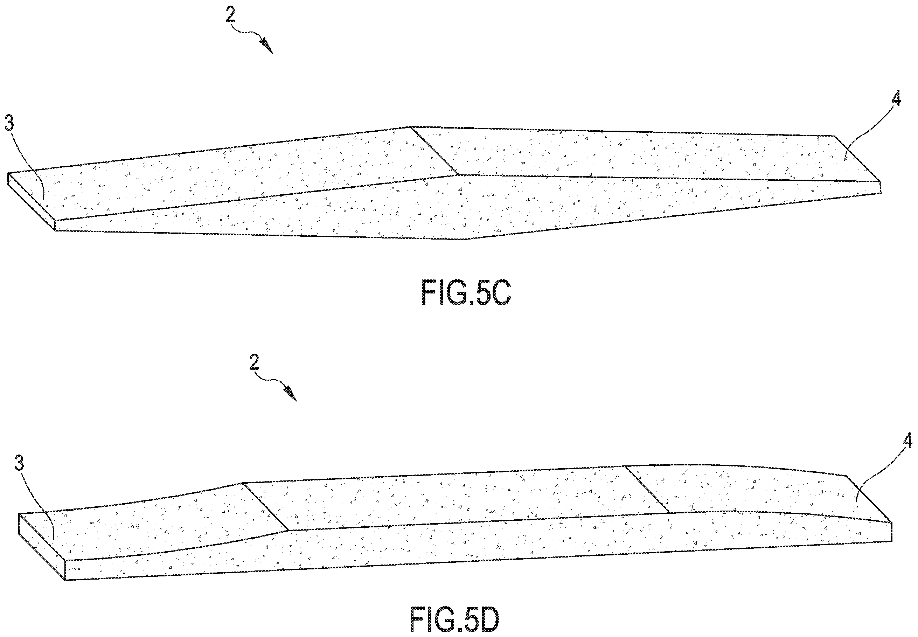

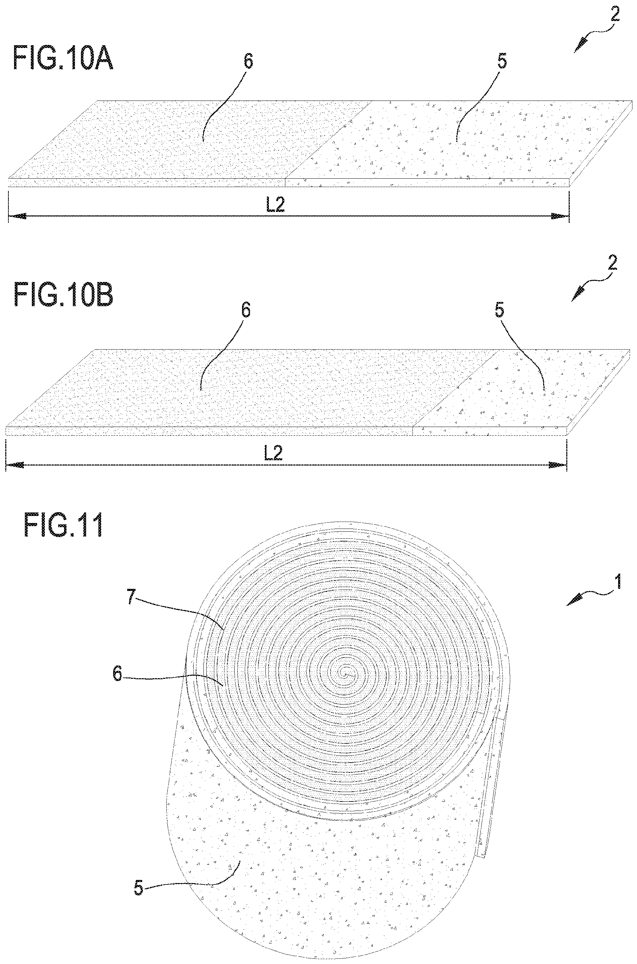

With reference to the figures, 1 denotes in its entirety a closing element. The closing element 1 can be constituted by a cap. The closing element is destined to be used for closing containers in general and in particular bottles containing alcoholic substances, but not only. The closing element 1 is particularly suitable for closing bottles of wine, both still and sparkling. The closing element 1 is made by winding one or more cork sheets 2 on themselves to form a roll having a substantially cylindrical conformation (see figure 2). The cork sheet 2 has two main faces 2a, 2b opposite one another and extends mainly in a longitudinal direction between a first and a second end 3, 4. The sheet 2 is generally made of natural cork; according to a variant it can be made of agglomerated or micro-agglomerated cork or another organic or inorganic material. According to a variant, the cork sheet 2 comprises various types of cork, for example both agglomerated cork and natural cork, of both superior and inferior quality. As illustrated in figures 10a and 10b, the cork sheet 2 can have a first portion 6 made of agglomerated cork or micro-agglomerated cork, but not only, and a second portion 5 made of natural cork. Both the portions 5, 6 can extend over a longitudinal semi-extension of the cork sheet 2 (figure 10a) so as to constitute two parts of the cork sheet 2, the extension of which can be different according to needs and the characteristics of the specific cap. For example, the two portions can be identical, or alternatively, the first portion 6 of the cork sheet 2 can have a longitudinal extension that is smaller than the longitudinal extension of the second portion 5 of the cork sheet (see figure 10b). In general, the first portion 6 can be made of a lower quality of cork or in any case having an exterior aspect that is less pleasing than that of the second portion 5. The cork sheet 2 is rolled so that the first portion 6 constitutes an internal portion of the winding of the closing element 1, while the second portion 5 constitutes an external portion of the winding of the closing element 1 (see figure 11). In this way, the closing element 1 has a pleasant exterior aspect while not being all made with the same type of cork, with clear savings on production costs. It should be noted that, in general, the cork considered to be less aesthetically pleasing still has, however, excellent and comparable technical qualities (impermeability, elasticity, etc.). The cork sheet 2 has a height H2, defined perpendicularly to the longitudinal extension L2 thereof, which can be comprised between 20 mm and 70 mm or between 30 mm and 70 mm or between 40 mm and 60 mm. Following the rolling of the cork sheet 2, the height H2 of the sheet, taking account of the winding pressure, substantially defines the height of the closing element 1. The cork sheet 2 further has a thickness S2 comprised between 0.3 mm and 3.5 mm or between 0.3 mm and 3 mm. The modest dimensions of the thickness S2 of the cork sheet 2 facilitate the rolling operation of the sheet 2 to define the closing element 1. As illustrated in figures 1, 3 and 4, the cork sheet 2 can have a thickness S2 that is constant along the whole longitudinal extension L2 thereof. Alternatively, the cork sheet 2 can have a thickness S2 variable between 0.3 mm and 3.5 mm or between 0.3 mm and 3 mm at least at an end 3, 4 thereof. The variation of the thickness S2 at an end 3, 4 of the cork sheet 2 advantageously facilitates the rolling of the sheet 2. The thickness S2 of the cork sheet 2 can vary at only one end 3 (see figure 5a) or at both ends 3, 4 (see figures 5b and 5d). In the latter variant, proceeding along the longitudinal extension L2 of the cork sheet 2, the thickness S2 varies at the first end 3 from a minimum thickness (for example 0.5 mm) to a maximum thickness (for example 3 mm), is maintained constant for a central portion of the cork sheet 2 and varies again at the second end 4, reducing from the maximum thickness to the minimum thickness. According to a further variant, the thickness can vary over the whole longitudinal extension L2 of the cork sheet 2 (see figure 5c). The thickness S2 can vary linearly or not and continuously or not between the minimum thickness and the maximum thickness depending on the application, the material and the sheet, the container and the liquid to be contained. The use of greater thicknesses enables using shorter sheets (length L2), thus enabling using and appreciating high-quality products which at present are thrown away or granulated for the building industry or for agglomerated and/or granulated caps. According to further variants, it is possible to combine the teachings of the solutions of figures from 5a to 5d with the teachings of figures 10a and 10b. For example according to further variants two or more portions can be included, among which a first portion made of a first type of cork (for example agglomerated or micro-agglomerated cork) and a second portion made of a different (or identical) type of cork (for example natural cork), wherein the first (or vice versa the second portion) further has a variable thickness and the second portion (or vice versa the first portion) has a uniform thickness or a variable thickness in a different measure (as illustrated in figures from 5a to 5d). Further, the variation in thickness can take place in one or more directions.

The use of greater thicknesses also reduces the quantity of insulator and/or glue required, bringing further benefits, both financial and in terms of production. As illustrated in figure 1, a layer of insulating material 7 is applied to the cork sheet 2. Laboratory testing has demonstrated that the layer of insulating material 7 substantially improves the closing element 1 in terms of impermeability over time against gases and/or air and liquids, such as, in particular, but not only, alcoholic solutions. The layer of insulating material 7 further functions as a barrier for oxygen, preventing it from passing through the closing element 1 and therefore entering into contact with the liquid contained in the bottle, preventing or controlling, if appropriately dimensioned, the oxidation of the liquid. In this way, the closing element 1 prevents deterioration of the liquid contained in the bottle. The insulating material is deformable so as to fill the empty spaces, the porosities and the surface discontinuities of the sheet. The deformation of the insulating material can take place during the rolling of the sheet 2, with the rolling pressure action. According to a variant, the deformation can take place before the pressured rolling of the layer of insulating material 7 on the cork sheet 2, for example by means of a press. By filling the surface irregularities of the sheet and/or imprecisions in the rolling process, the insulating material fills in the empty spaces in the cork so as to prevent formation of pathways for passage of gases and liquids between consecutive layers of cork in the winding. The insulating material can be of an adhesive type, but not only, and can be hot- or cold-applied. The adhesive insulating material guarantees excellent sealing of the closing element 1 and the compactness of the winding which does not deteriorate and does not tend to fail over time. Further, it substantially improves the seal on the pressurised bottling, ensuring the compactness of the external rings in contact with the container and avoiding peeling during the bottling operation.

In the present description, the term "insulating material" is intended to mean a material having relevant technical characteristics of impermeability to liquids and air and/or gases, able to guarantee a seal of the closing element to those substances that is sufficiently good for a sufficient time, according to the aims of the present invention.

In the present description, the term "substantially impermeable" to liquids and air and/or the gases is intended to mean that the element in question substantially prevents the passage of liquids and air and/or gases or which strongly limits the passage so as to guarantee a sufficient seal for the applications of interest, in particular for the closing of wine bottles and/or in a substantially like or similar manner to the degree of impermeability of a single-piece cork cap.

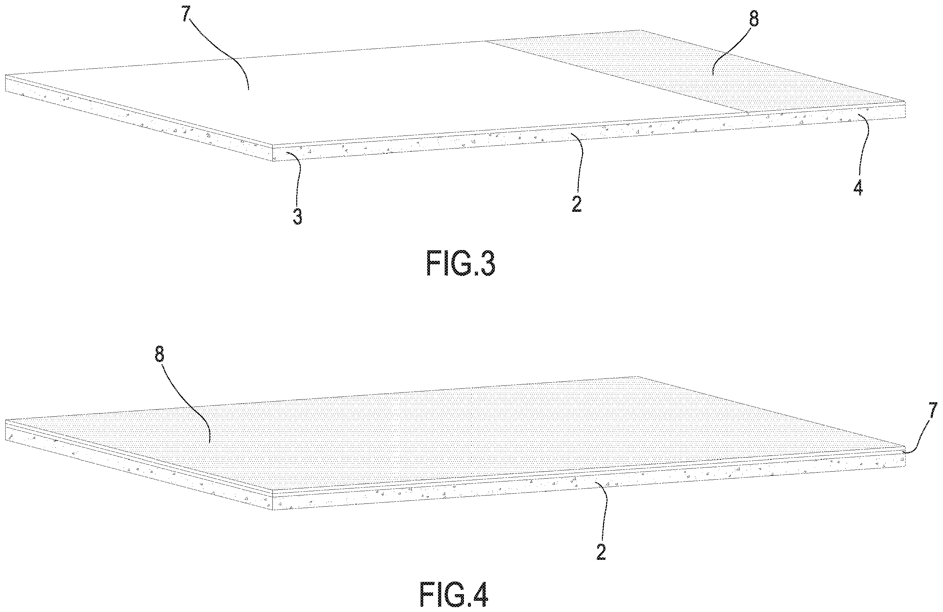

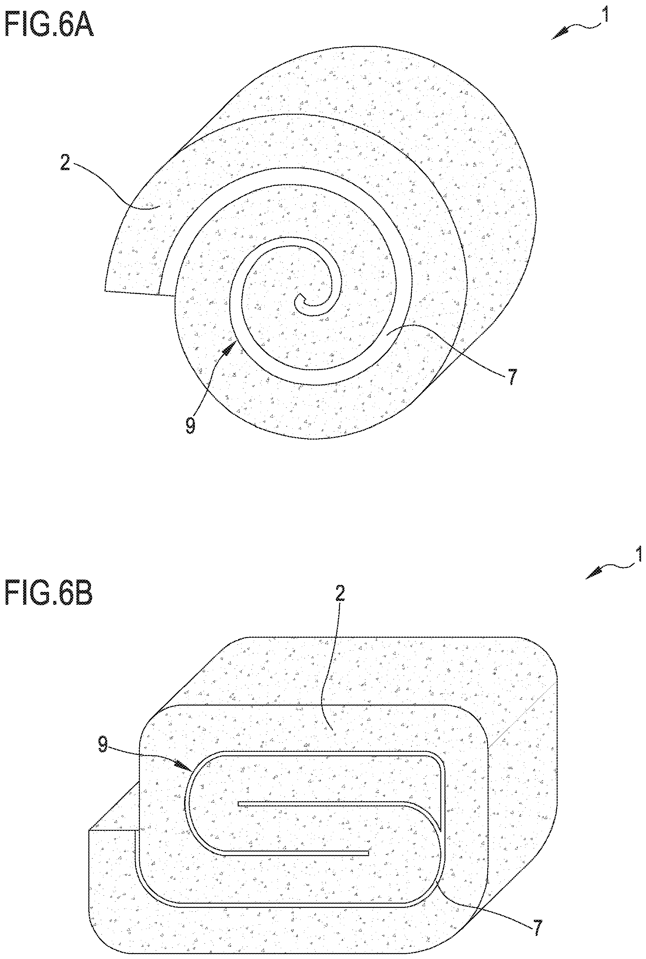

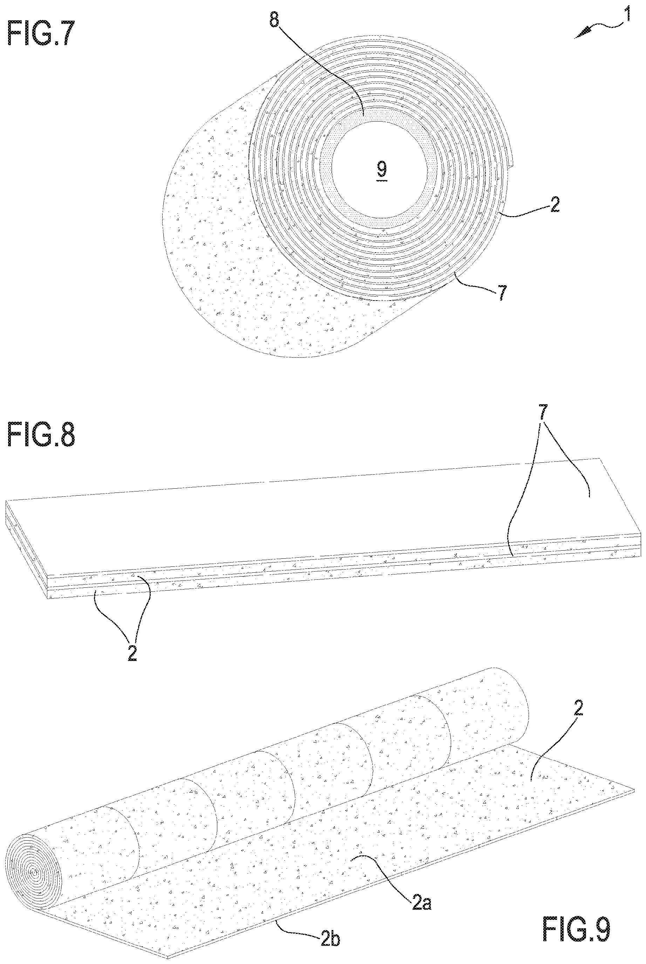

In a variant, the adhesive insulating material can for example be constituted by a glue having properties of impermeability to liquids and air and/or gases and suitable to be used with the cork. According to another variant, the insulating material can instead be of a non-adhesive type. In this case, to guarantee in any case the blocking of the winding of the cork sheet 2 a layer of glue 8 or any other adhesive material can be applied at least at an end 3, 4 (see figure 3) of the cork sheet 2; alternatively the blocking could be mechanical (sewing or the like). Alternatively the layer of glue 8 can be applied on an end portion of the layer of insulating material 7 or on the whole surface of the layer of insulating material 7 (see figure 4). The insulating material can be applied in various ways to the cork sheet 2. The insulating material can for example be sprayed or atomised on at least a portion of a face 2a, 2b of the cork sheet 2, or on both the faces 2a, 2b of the cork sheet 2. Alternatively, the insulating material can be spread on the cork sheet 2 or applied in the form of an adhesive sheet. It should be noted that an adhesive material or glue is destined to prevent the separation of two surfaces, while an insulating material ensures the impermeability and the impossibility of penetration between the surfaces. An insulator is not necessarily also an adhesive, and vice versa. According to a further alternative, the cork sheet 2 can be immersed in a bath of liquid insulating material; the immersion in the bath can be partial or complete. Alternatively the insulating material can be injected from the ends after the rolling. Obviously also further application modes of the insulating material can be adopted, as a function of the chemical-physical characteristics and the state (solid or liquid) of the insulating material. The insulating material can be applied several times to the cork sheet 2 so as to reach the desired thickness. Regardless of the application mode of the insulating material to the cork sheet 2, the insulating material is applied on at least a face 2a, 2b of the cork sheet 2 on at least 10% or at least 30% or on at least 50% or at least 70% or at least 90% of the surface of the face 2a, 2b or on the whole surface of the face 2a, 2b. The Applicant has found that optimal impermeability results against the gases and/or the air and the liquids have been obtained by applying the insulating material on at least 50% of the surface of a face 2a, 2b of the cork sheet 2. According to an embodiment, the insulating material is applied on both faces 2a, 2b of the cork sheet 2 on at least 10% or at least 30% or at least 50% or at least 70% or at least 90% of the surface of each face 2a, 2b. A further cork sheet 2 can further be applied on the cork sheet 2, at a face 2a, 2b thereof treated with the insulating material so that a layer of insulating material 7 is interposed between two cork sheets 2. As previously mentioned, the use of greater thicknesses, in this case a plurality of sheets, enables using and appreciating high-quality products which at present are thrown away or granulated for the building industry or for agglomerated and/or granulated caps. The layer of insulating material 7 can extend along a band having a height that is at least equal to 10% or at least 30% or at least 50% or at least 70% or at least 90% of the height H2 of the cork sheet 2. The height of the band can further vary or be constant along the longitudinal extension of the cork sheet 2. The band preferably develops without interruption along the whole longitudinal extension L2 of the cork sheet 2. Alternatively, the insulating material can extend along a plurality of bands each having a respective height and arranged on the same face 2a, 2b of the cork sheet 2. Alternatively the insulating material can be spread or applied in another way suitable for the aim and/or can be applied according to various inclinations and/or applied in the form of a net. The sum of the heights of the bands can be at least equal to 10% or at least equal to 30% or at least equal to 50% or at least equal to 70% or at least equal to 90% of the height H2 of the cork sheet 2. The height of the band, or the sum of the height of the bands, can preferably be at least equal to 10 mm or at least equal to 20 mm or at least equal to 30 mm or at least equal to 40 mm or at least equal to 50 mm and in particular can be substantially equal to the height H2 of the cork sheet 2. As illustrated in figure 1, the layer of insulating material 7 can extend substantially over all the surface of a face 2a, 2b of the cork sheet 2, i.e. over the whole height H2 and the whole longitudinal extension L2 of the sheet 2. The winding of the cork sheet 2 and the layer of insulating material 7 defining the closing element 1 can have a substantially spiral progression defined on transversal sections at the height of the closing element (see figure 2 and figure 6a). Alternatively the cork sheet 2 can be folded to define a conformation such as the one illustrated in figure 6b, but not only. The cork sheet 2 can be rolled in such a way that a central core 9 of the winding is orientated in an opposite direction with respect to the main winding direction of the spiral or be folded to form an "S" shape, i.e. to form a fold having an opposite folding direction with respect to the folding direction of the remaining folds (figure 6b). According to a variant, the central core 9 of the closing element 1 can be made of a plastic material, or any organic compound in the olefin class and the cork sheet 2 can be engaged to the central core 9 by means of a layer of glue 8 (see figure 7). In the following the main steps of the process for manufacturing the closing element will be described. In a first step of the process a cork sheet 2 is predisposed. The cork sheet 2 has one or more of the above-described characteristics and can further have a transversal extension L2 comprised between 20 mm and 10 m. Should the closing element have a longitudinal extension H2 comprised between 20 mm and 70 mm, the process is preferably destined for making a single closing element 1, while in a case where the sheet has a longitudinal extension H2 comprised between 20 mm and 10 m, the process is destined to make a plurality of caps 1. Figure 9 illustrates for example a cork sheet 2 having large dimensions that can be wound and then cut for making a plurality of caps 1. A layer of insulating material 7 is applied to the cork sheet 2 according to the ways described in the foregoing. In the embodiment in which the insulating material is not adhesive, a layer of glue 8 or any other adhesive material can be applied on the layer of insulating material 7 or directly on a face 2a, 2b of the cork sheet 2 as described in the foregoing or on both faces. At this point the cork sheet 2 and the layer of insulating material 7 are rolled so as to define an alternated winding of cork sheets 2 and layers of insulating material 7 (see figure 2). The rolling pressure of the cork sheet 2 determines the deformation of the insulating material which, as is becomes modelled, fills the surface irregularities of the cork sheet 2 so as to substantially improve the impermeabilising capacity of the closing element 1 to the gases and liquids. After having rolled the cork sheet 2 together with the layer of insulating material 7, if the sheet 2 has appropriate dimensions as described in the foregoing, the winding can be cut to make a plurality of caps 1. The present invention makes it possible to obtain one or more of the following advantages and to resolve one or more of the problems encountered in the prior art. Firstly the invention enables conserving liquids (such as wine) in bottles in a better way and for long period of times. The invention further enables making a resistant closing element, which is not subject to structural failure (peeling, but not only) and which improves its characteristics of being impermeable to gases and liquids over time. The invention further enables preventing contact between the air and in particular the oxygen and the liquid contained in the bottle, in this way preventing the deterioration of the liquid (oxidation but not only). The invention further enables making high-quality caps by means of the use of even very short cork sheets but having a great thickness, and at present considered less valuable and expensive with respect to the sheets of a suitable thickness for making caps in a single piece, and even by means of the use of cork sheets and parts which are normally considered waste products, thus reprising this important natural product. The invention further enables eliminating or reducing, thanks to the conformation of the closing element and the layer of coating of insulating material that also functions as a stabiliser, the emission of red powders and other possible contaminants (TCA, but not only) from the closing element toward the product contained in the bottle. The invention further enables avoiding or reducing the use of conventional glues and adhesive materials potentially containing contaminant substances. The invention further makes available a process which enables making cork caps simple and at low cost. The invention is moreover convenient to use, easy to implement and simple and economical to make.

## Claims

1. A closing element (1) for containers for liquids, in particular bottles, comprising at least a cork sheet (2) having two opposite principal faces (2a, 2b) ; said closing element (1) being **characterized in that** it further comprises at least a layer of insulating material (7), impermeable to liquids and to air and/or gases, coupled to the cork sheet (2) so as to at least partly cover at least one of said two main faces (2a, 2b), the cork sheet (2) and the layer of insulating material (7) being rolled so as to define said closing element (1) by alternatingly winding the cork sheet (2) and the layer of insulating material (7), and wherein the layer of insulating material (7) and the alternated winding are configured and predisposed to make the closing element (1) impermeable or substantially impermeable to liquids and air and/or gases.

2. The closing element according to claim 1, wherein the layer of insulating material (7) and the alternated winding are configured and predisposed to make the closing element (1) impermeable or substantially impermeable to liquids and air in a like, similar or equivalent way to a degree of impermeability provided by a cap made of cork in a single-piece and/or wherein the insulating material is deformable and wherein the layer of insulating material (7) is configured for at least partly filling empty spaces and/or for filling surface discontinuities present in the cork sheet (2) as to make the closing element (1) impermeable to liquids and air and/or gases, and/or wherein the insulating material is sprayed, or spread, or injected, or applied in a form of an adhesive sheet, or applied by immersion coating, on the cork sheet (2),

3. The closing element according to claims 1 or 2, wherein the insulating material is applied, predisposed and configured for making the closing element (1) impermeable to liquids and air and/or gases, in particular for forming a barrier to oxygen, and/or wherein the insulating material is selected, applied, predisposed and configured for making the closing element (1) impermeable to liquids and air and/or gases, in particular able to guarantee a liquid penetration, for example in a case of a closing element applied as a cap of a bottle containing wine, through the closing element, of less than 10 mm after a time interval of 12 months, or less than 5 mm after a time interval of 12 months, or less than 2 mm after a time interval of 12 months, or less than 1 mm after a time interval of 12 months, and/or less than 10 mm after a time interval of 18 months, or less than 5 mm after a time interval of 12 months, or less than 3 mm after a time interval of 12 months.

4. The closing element according to any one of the preceding claims, wherein the layer of insulating material (7) is engaged, before the making of the alternated winding, only on a first face (2a) of the cork sheet (2) and/or wherein the layer of insulating material (7) is applied on at least 10%, or at least 30% or at least 50% or at least 70% or at least 90% of the surface of the first face (2a) of the cork sheet (2) or wherein the layer of insulating material (7) is applied on the whole surface of the first face of the cork sheet.

5. The closing element according to any one of the preceding claims, wherein the layer of insulating material (7) is made on the cork sheet (2) in a form of at least a band a minimum height of which is at least equal to 10% or at least 30% or at least 50% or at least 70% or at least 90% of a height (H2) of the cork sheet (2) and/or the height of the closing element (1), said band extending substantially over the whole longitudinal extension (L2) of the cork sheet (2), perpendicularly to the height (H2) of the cork sheet (2) and/or to the height of the closing element (1) or wherein the layer of insulating material (7) is made on the cork sheet (2) in a form of a plurality of bands a sum total of respective heights of which at each point of the longitudinal extension (L2) of the cork sheet (2) is at least equal to 10% or at least 30% or at least 50% or at least 70% or at least 90% of a height (H2) of the cork sheet (2) and/or of the height of the closing element (1), said bands extending on the same face (2a, 2b) substantially over a whole longitudinal extension (L2) of the cork sheet (2), perpendicularly at the height (H2) of the cork sheet (2) and/or at the height of the closing element (1), or wherein the layer of insulating material (7) is made on the cork sheet (2) in a form of at least a band a minimum height of which is at least equal to 10 mm or at least 20 mm or at least 30 mm or at least 40 mm or at least 50 mm, said band extending substantially over a whole longitudinal extension (L2) of the cork sheet (2), perpendicularly to a height (H2) of the cork sheet (2) and/or to the height of the closing element (1) or wherein the layer of insulating material (7) is made on the cork sheet (2) in a form of a plurality of bands a sum of the respective heights of which is at least equal to 10 mm or at least 20 mm or at least 30 mm or at least 40 mm or at least 50 mm, said bands extending on the same face (2a, 2b) substantially over a whole longitudinal extension (L2) of the cork sheet (2), perpendicularly to the height (H2) of the cork sheet (2) and/or to the height of the closing element (1).

6. The closing element according to any one of the preceding claims, wherein the insulating material is of an adhesive type and/or is configured to be hot-applied or cold-applied on the cork sheet (2).

7. The closing element according to any one of claims from 1 to 5, wherein the insulating material is of a non-adhesive type.

8. The closing element according to any one of the preceding claims wherein the closing element (1) further comprises at least an additional layer of glue (8) or adhesive material configured for fixing at least an external terminal part of the alternated winding of the cork sheet (2) or configured for fixing the alternated winding in a form of a closing element (1) or configured for attaching the layer of insulating material (7) to the cork sheet (2).

9. The closing element according to any one of the preceding claims, wherein the insulating material is an emulsion of a copolymer or an emulsion of an acrylic copolymer or an emulsion of a vinyl copolymer or is an emulsion of an acrylic-vinyl copolymer and/or is a sealant and/or is a surface filler and/or film former and/or an impregnating agent and/or is a hydro-repellent and/or an oil-repellent.

10. The closing element according to any one of the preceding claims, wherein the insulating material is of a type compatible for use with foodstuffs according to existing reference standards.

11. The closing element according to any one of the preceding claims, wherein the glue or adhesive material is suitable for gluing porous surfaces and/or is of a synthetic type and/or is of a hot-melt type and/or comprises one or more from among the following raw materials: White hydrogenated hydrocarbon resin; Penta-ester resin from erythritol; Ethylene Vinyl Acetate (EVA) copolymer; Naphthenic synthetic oil; pharmaceutical grade saturated hydrocarbon oil; Polybutene.

12. The closing element according to any one of the preceding claims, wherein the cork sheet (2) has a constant thickness (S2) comprised between 0.3 mm and 5 mm or between 0.5 mm and 5 mm or wherein the cork sheet (2) has, in at least a portion thereof, a thickness (S2) variable between 0.3 mm and 5 mm or between 0.5 mm and 5 mm, the thickness (S2) varying in a parallel direction to the longitudinal extension (L2) of the cork sheet (2) perpendicularly to the height (H2) of the cork sheet (2) and/or to the height of the closing element (1) and/or wherein the cork sheet (2) has a thickness (S2) that is variable in a parallel direction to the longitudinal extension (L2) of the cork sheet (2) perpendicularly to the height (H2) of the cork sheet (2) and/or to the height of the closing element (1), the thickness (S2) being minimum at least at a first end (3) of the cork sheet (2), destined to be positioned at the centre of the alternated winding, and/or at least at a second end (4) of the cork sheet (2) destined to constitute an external layer of the alternated winding, and the thickness (S2) being maximum at least at a portion of the sheet distanced from the ends (3, 4) of the sheet (2) destined to constitute respectively a central portion and an external layer of the alternated winding.

13. The closing element according to any one of the preceding claims, having a diameter comprised between 15 and 40 mm or between 18 and 36 mm or between 22 and 34 mm and/or having a height comprised between 20 and 70 mm or between 30 and 70 mm or between 40 and 60 mm.

14. The closing element according to any one of the preceding claims, wherein the cork sheet (2) is made of a solid natural cork or of an agglomerated cork or micro-agglomerated cork, or an insulating material and/or wherein the cork sheet (2) comprises various types of cork, for example natural cork and agglomerated cork or micro-agglomerated cork and/or wherein a first portion (6) of the cork sheet (2) is made of agglomerated or micro-agglomerated cork and a second portion (5) of the cork sheet (2), attached to the first portion (6), is made of solid natural cork and/or wherein a first portion (6) of the cork sheet (2) destined to constitute a central portion of the closing element is made of agglomerated or micro-agglomerated cork and wherein a second portion (5) of the cork sheet (2) destined to constitute an external layer of the alternated winding is made of solid natural cork.

15. A process for making a closing element according to claim 1, comprising:
- predisposing a cork sheet (2) having two main faces (2a, 2b) opposite one another,
- applying a layer of insulating material (7), impermeable to liquids and to air and/or gases, to the cork sheet (2) so as to at least partly cover at least one of said two main faces (2a, 2b) of the cork sheet (2),
- rolling the cork sheet (2) so as to define said closing element (1) by means of an alternated winding of the cork sheet (2) and the layer of insulating material (7), the layer of insulating material (7) and the alternated winding being configured and predisposed to make the closing element (1) impermeable to liquids and air and/or gases.

## Patentansprüche

1. Verschlusselement (1) für Behälter für Flüssigkeiten, insbesondere Flaschen, umfassend wenigstens eine Korklage (2), welche zwei entgegengesetzte Hauptflächen (2a, 2b) aufweist; wobei das Verschlusselement (1) **dadurch gekennzeichnet ist, dass** es ferner wenigstens eine Schicht aus isolierendem Material (7) umfasst, welche undurchlässig für Flüssigkeiten und für Luft und/oder Gase ist, welche derart mit der Korklage (2) gekoppelt ist, dass sie wenigstens eine der zwei Hauptflächen (2a, 2b) wenigstens teilweise bedeckt, wobei die Korklage (2) und die Schicht aus isolierendem Material (7) derart gerollt sind, dass sie durch alternierendes Wickeln der Korklage (2) und der Schicht aus isolierendem Material (7) das Verschlusselement (1) definieren, und wobei die Schicht aus isolierendem Material (7) und die alternierende Wicklung dazu eingerichtet und prädisponiert sind, das Verschlusselement (1) undurchlässig oder im Wesentlichen undurchlässig für Flüssigkeiten und Luft und/oder Gase zu machen.

2. Verschlusselement nach Anspruch 1, wobei die Schicht aus isolierendem Material (7) und die alternierende Wicklung dazu eingerichtet und prädisponiert sind, das Verschlusselement (1) undurchlässig oder im Wesentlichen undurchlässig für Flüssigkeiten und Luft zu machen, auf eine ähnliche, gleiche oder äquivalente Weise wie ein Grad von Undurchlässigkeit, welcher von einer Kappe bereitgestellt wird, welche aus Kork in einem einzelnen Stück hergestellt ist, und/oder wobei das isolierende Material verformbar ist und wobei die Schicht aus isolierendem Material (7) dazu eingerichtet ist, leere Räume wenigstens teilweise auszufüllen und/oder in der Korklage (2) vorhandene Oberflächendiskontinuitäten auszufüllen, um das Verschlusselement (1) undurchlässig für Flüssigkeiten und Luft und/oder Gase zu machen, und/oder wobei das isolierende Material auf die Korklage (2) gesprüht oder verteilt oder injiziert oder in einer Form einer haftenden Lage aufgebracht oder durch Tauchbeschichten aufgebracht ist.

3. Verschlusselement nach Anspruch 1 oder 2, wobei das isolierende Material aufgebracht, prädisponiert und eingerichtet ist, um das Verschlusselement (1) undurchlässig für Flüssigkeiten und Luft und/oder Gase zu machen, insbesondere um eine Barriere für Sauerstoff zu bilden, und/oder wobei das isolierende Material ausgewählt, aufgebracht, prädisponiert und eingerichtet ist, um das Verschlusselement (1) undurchlässig für Flüssigkeiten und Luft und/oder Gase zu machen, insbesondere dazu in der Lage, einen Flüssigkeitsdurchtritt, zum Beispiel in einem Fall eines als eine Kappe einer Wein beinhaltenden Flasche angewandten Verschlusselements, durch das Verschlusselement von weniger als 10 mm nach einem Zeitintervall von 12 Monaten oder weniger als 5 mm nach einem Zeitintervall von 12 Monaten oder weniger als 2 mm nach einem Zeitintervall von 12 Monaten oder weniger als 1 mm nach einem Zeitintervall von 12 Monaten und/oder weniger als 10 mm nach einem Zeitintervall von 18 Monaten oder weniger als 5 mm nach einem Zeitintervall von 12 Monaten oder weniger als 3 mm nach einem Zeitintervall von 12 Monaten zu garantieren.

4. Verschlusselement nach einem der vorhergehenden Ansprüche, wobei die Schicht aus isolierendem Material (7) vor dem Herstellen der alternierenden Wicklung nur an einer ersten Fläche (2a) der Korklage (2) in Eingriff gebracht ist und/oder wobei die Schicht aus isolierendem Material (7) auf wenigstens 10 % oder wenigstens 30 % oder wenigstens 50 % oder wenigstens 70 % oder wenigstens 90 % der Oberfläche der ersten Fläche (2a) der Korklage (2) aufgebracht ist oder wobei die Schicht aus isolierendem Material (7) auf die gesamte Oberfläche der ersten Fläche der Korklage aufgebracht ist.

5. Verschlusselement nach einem der vorhergehenden Ansprüche, wobei die Schicht aus isolierendem Material (7) auf der Korklage (2) in einer Form wenigstens eines Bandes hergestellt ist, wobei eine minimale Höhe davon wenigstens gleich 10 % oder wenigstens 30 % oder wenigstens 50 % oder wenigstens 70 % oder wenigstens 90 % einer Höhe (H2) der Korklage (2) und/oder der Höhe des Verschlusselements (1) ist, wobei sich das Band rechtwinklig zu der Höhe (H2) der Korklage (2) und/oder zu der Höhe des Verschlusselements (1) im Wesentlichen über die gesamte longitudinale Erstreckung (L2) der Korklage (2) erstreckt, oder wobei die Schicht aus isolierendem Material (7) auf der Korklage (2) in einer Form einer Mehrzahl von Bändern hergestellt ist, wobei eine Gesamtsumme jeweiliger Höhen davon an jedem Punkt der longitudinalen Erstreckung (L2) der Korklage (2) wenigstens gleich 10 % oder wenigstens 30 % oder wenigstens 50 % oder wenigstens 70 % oder wenigstens 90 % einer Höhe (H2) der Korklage (2) und/oder der Höhe des Verschlusselements (1) ist, wobei sich die Bänder rechtwinklig zu der Höhe (H2) der Korklage (2) und/oder zu der Höhe des Verschlusselements (1) auf der gleichen Fläche (2a, 2b) im Wesentlichen über eine gesamte longitudinale Erstreckung (L2) der Korklage (2) erstrecken, oder wobei die Schicht aus isolierendem Material (7) auf der Korklage (2) in einer Form wenigstens eines Bandes hergestellt ist, wobei eine minimale Höhe davon wenigstens gleich 10 mm oder wenigstens 20 mm oder wenigstens 30 mm oder wenigstens 40 mm oder wenigstens 50 mm ist, wobei sich das Band rechtwinklig zu einer Höhe (H2) der Korklage (2) und/oder zu der Höhe des Verschlusselements (1) im Wesentlichen über eine gesamte longitudinale Erstreckung (L2) der Korklage (2) erstreckt, oder wobei die Schicht aus isolierendem Material (7) auf der Korklage (2) in einer Form einer Mehrzahl von Bändern hergestellt ist, wobei eine Summe der jeweiligen Höhen davon wenigstens gleich 10 mm oder wenigstens 20 mm oder wenigstens 30 mm oder wenigstens 40 mm oder wenigstens 50 mm ist, wobei sich die Bänder rechtwinklig zu der Höhe (H2) der Korklage (2) und/oder zu der Höhe des Verschlusselements (1) auf der gleichen Fläche (2a, 2b) im Wesentlichen über eine gesamte longitudinale Erstreckung (L2) der Korklage (2) erstrecken.

6. Verschlusselement nach einem der vorhergehenden Ansprüche, wobei das isolierende Material von einem haftenden Typ ist und/oder dazu eingerichtet ist, heiß oder kalt auf die Korklage (2) aufgebracht zu werden.

7. Verschlusselement nach einem der Ansprüche 1 bis 5, wobei das isolierende Material von einem nichthaftenden Typ ist.

8. Verschlusselement nach einem der vorhergehenden Ansprüche, wobei das Verschlusselement (1) ferner wenigstens eine zusätzliche Schicht eines Klebers (8) oder haftenden Materials umfasst, welche dazu eingerichtet ist, wenigstens einen äußeren Endteil der alternierenden Wicklung der Korklage (2) zu fixieren, oder dazu eingerichtet ist, die alternierende Wicklung in einer Form eines Verschlusselements (1) zu fixieren, oder dazu eingerichtet ist, die Schicht aus isolierendem Material (7) an der Korklage (2) anzubringen.

9. Verschlusselement nach einem der vorhergehenden Ansprüche, wobei das isolierende Material eine Emulsion eines Copolymers oder eine Emulsion eines Acryl-Copolymers oder eine Emulsion eines Vinyl-Copolymers ist oder eine Emulsion eines Acryl-Vinyl-Copolymers ist und/oder ein Dichtstoff ist und/oder ein Oberflächenfüllstoff und/oder ein Filmbildner und/oder ein Imprägniermittel ist und/oder ein wasserabweisendes Mittel und/oder ein ölabweisendes Mittel ist.

10. Verschlusselement nach einem der vorhergehenden Ansprüche, wobei das isolierende Material von einem Typ ist, welcher gemäß bestehenden Referenzstandards zur Verwendung mit Lebensmitteln kompatibel ist.

11. Verschlusselement nach einem der vorhergehenden Ansprüche, wobei der Kleber oder das haftende Material dazu geeignet ist, poröse Oberflächen zu verkleben, und/oder von einem synthetischen Typ ist und/oder von einem heißschmelzenden Typ ist und/oder eines oder mehrere aus den folgenden Rohmaterialien umfasst: weißes hydriertes Kohlenwasserstoffharz; Pentaesterharz aus Erythrit; Ethylen-Vinylacetat- (EVA) -Copolymer; naphtenisches synthetisches Öl; gesättigtes Kohlenwasserstofföl von pharmazeutischer Qualität; Polybuten.

12. Verschlusselement nach einem der vorhergehenden Ansprüche, wobei die Korklage (2) eine konstante Dicke (S2) aufweist, welche zwischen 0,3 mm und 5 mm oder zwischen 0,5 mm und 5 mm umfasst ist, oder wobei die Korklage (2) in wenigstens einem Abschnitt davon eine Dicke (S2) aufweist welche zwischen 0,3 mm und 5 mm oder zwischen 0,5 mm und 5 mm variabel ist, wobei die Dicke (S2) in einer zu der longitudinalen Erstreckung (L2) der Korklage (2) parallelen, zu der Höhe (H2) der Korklage (2) und/oder zu der Höhe des Verschlusselements (1) rechtwinkligen Richtung variiert, und/oder wobei die Korklage (2) eine Dicke (S2) aufweist, welche in einer zu der longitudinalen Erstreckung (L2) der Korklage (2) parallelen, zu der Höhe (H2) der Korklage (2) und/oder zu der Höhe des Verschlusselements (1) rechtwinkligen Richtung variiert, wobei die Dicke (S2) wenigstens an einem ersten Ende (3) der Korklage (2), welches dazu bestimmt ist, in der Mitte der alternierenden Wicklung positioniert zu sein, und/oder wenigstens an einem zweiten Ende (4) der Korklage (2), welches dazu bestimmt ist, eine äußere Schicht der alternierenden Wicklung auszumachen, minimal ist und die Dicke (S2) an wenigstens einem Abschnitt der Lage maximal ist, welcher von den Enden (3, 4) der Lage (2) beabstandet ist, welche dazu bestimmt sind, einen mittleren Abschnitt bzw. eine äußere Schicht der alternierenden Wicklung auszumachen.

13. Verschlusselement nach einem der vorhergehenden Ansprüche, aufweisend einen Durchmesser, welcher zwischen 15 und 40 mm oder zwischen 18 und 36 mm oder zwischen 22 und 34 mm umfasst ist, und/oder aufweisend eine Höhe, welche zwischen 20 und 70 mm oder zwischen 30 und 70 mm oder zwischen 40 und 60 mm umfasst ist.

14. Verschlusselement nach einem der vorhergehenden Ansprüche, wobei die Korklage (2) aus einem massiven Naturkork oder aus einem Presskork oder Mikropresskork oder einem isolierenden Material hergestellt ist und/oder wobei die Korklage (2) verschiedene Typen von Kork, zum Beispiel Naturkork und Presskork oder Mikropresskork, umfasst und/oder wobei ein erster Abschnitt (6) der Korklage (2) aus Press- oder Mikropresskork hergestellt ist und ein zweiter Abschnitt (5) der Korklage (2), welcher an dem ersten Abschnitt (6) angebracht ist, aus massivem Naturkork hergestellt ist und/oder wobei ein erster Abschnitt (6) der Korklage (2), welcher dazu bestimmt ist, einen mittleren Abschnitt des Verschlusselements auszumachen, aus Press- oder Mikropresskork hergestellt ist und wobei ein zweiter Abschnitt (5) der Korklage (2), welcher dazu bestimmt ist, eine äußere Schicht der alternierenden Wicklung auszumachen, aus massivem Naturkork hergestellt ist.

15. Verfahren zur Herstellung eines Verschlusselements nach Anspruch 1, umfassend:
- Prädisponieren einer Korklage (2), welche zwei zueinander entgegengesetzte Hauptflächen (2a, 2b) aufweist,
- Aufbringen einer Schicht aus isolierendem Material (7), welche undurchlässig für Flüssigkeiten und für Luft und/oder Gase ist, auf die Korklage (2), derart dass sie wenigstens eine der zwei Hauptflächen (2a, 2b) der Korklage (2) wenigstens teilweise bedeckt,
- Rollen der Korklage (2), derart dass sie mittels einer alternierenden Wicklung der Korklage (2) und der Schicht aus isolierendem Material (7) das Verschlusselement (1) definiert, wobei die Schicht aus isolierendem Material (7) und die alternierende Wicklung dazu eingerichtet und prädisponiert sind, das Verschlusselement (1) undurchlässig für Flüssigkeiten und Luft und/oder Gase zu machen.

## Revendications

1. Élément de fermeture (1) pour récipients de liquides, en particulier de bouteilles, comprenant au moins une feuille de liège (2) ayant deux faces principales (2a, 2b) opposées ; ledit élément de fermeture (1) étant **caractérisé en ce qu'**il comprend en outre au moins une couche de matériau isolant (7), imperméable aux liquides et à l'air et/ou aux gaz, accouplée à la feuille de liège (2) afin d'au moins partiellement recouvrir au moins l'une desdites deux faces principales (2a, 2b), la feuille de liège (2) et la couche de matériau isolant (7) étant enroulées afin de définir ledit élément de fermeture (1) en enroulant alternativement la feuille de liège (2) et la couche de matériau isolant (7), et la couche de matériau isolant (7) et l'enroulement alterné étant configurés et prédisposés pour rendre l'élément de fermeture (1) imperméable ou sensiblement imperméable aux liquides et à l'air et/ou aux gaz.

2. Élément de fermeture selon la revendication 1, dans lequel la couche de matériau isolant (7) et l'enroulement alterné sont configurés et prédisposés pour rendre l'élément de fermeture (1) imperméable ou sensiblement imperméable aux liquides et à l'air d'une manière identique, similaire ou équivalente à un degré d'imperméabilité fourni par un bouchon fabriqué à partir de liège en une pièce unique et/ou le matériau isolant étant déformable et la couche de matériau isolant (7) étant configurée pour remplir au moins partiellement les espaces vides et/ou les discontinuités de surface de remplissage présentes dans la feuille de liège (2) afin de rendre l'élément de fermeture (1) imperméable aux liquides et à l'air et/ou aux gaz, et/ou le matériau isolant étant pulvérisé, ou étalé, ou injecté, ou appliqué sous une forme de feuille adhésive, ou appliqué par revêtement par immersion, sur la feuille de liège (2).

3. Élément de fermeture selon les revendications 1 ou 2, le matériau isolant étant appliqué, prédisposé et configuré pour rendre l'élément de fermeture (1) imperméable aux liquides et à l'air et/ou aux gaz, en particulier pour former une barrière à l'oxygène, et/ou le matériau isolant étant sélectionné, appliqué, prédisposé et configuré pour rendre l'élément de fermeture (1) imperméable aux liquides et à l'air et/ou aux gaz, en particulier capable de garantir une pénétration de liquide, par exemple dans un cas d'un élément de fermeture appliqué comme bouchon d'une bouteille contenant du vin, à travers l'élément de fermeture, de moins de 10 mm après un intervalle de temps de 12 mois, ou de moins de 5 mm après un intervalle de temps de 12 mois, ou de moins de 2 mm après un intervalle de temps de 12 mois, ou de moins de 1 mm après un intervalle de temps de 12 mois, et/ou de moins de 10 mm après un intervalle de temps de 18 mois, ou de moins de 5 mm après un intervalle de temps de 12 mois, ou de moins de 3 mm après un intervalle de temps de 12 mois.

4. Élément de fermeture selon l'une quelconque des revendications précédentes, la couche de matériau isolant (7) étant engagée, avant la fabrication de l'enroulement alterné, uniquement sur une première face (2a) de la feuille de liège (2) et/ou la couche de matériau isolant (7) étant appliquée sur au moins 10 %, ou au moins 30 % ou au moins 50 % ou au moins 70 % ou au moins 90 % de la surface de la première face (2a) de la feuille de liège (2) ou la couche de matériau isolant (7) étant appliquée sur la surface entière de la première face de la feuille de liège.

5. Élément de fermeture selon l'une quelconque des revendications précédentes, la couche de matériau isolant (7) étant fabriquée sur la feuille de liège (2) sous une forme d'au moins une bande dont une hauteur minimale est au moins égale à 10 % ou au moins à 30 % ou au moins à 50 % ou au moins à 70 % ou au moins à 90 % d'une hauteur (H2) de la feuille de liège (2) et/ou de la hauteur de l'élément de fermeture (1), ladite bande s'étendant sensiblement sur l'extension longitudinale (L2) complète de la feuille de liège (2), perpendiculairement à la hauteur (H2) de la feuille de liège (2) et/ou à la hauteur de l'élément de fermeture (1) ou la couche de matériau isolant (7) étant fabriquée sur la feuille de liège (2) sous une forme d'une pluralité de bandes dont une somme totale des hauteurs respectives à chaque point de l'extension longitudinale (L2) de la feuille de liège (2) est au moins égale à 10 % ou à 30 % ou au moins à 50 % ou au moins à 70 % ou au moins à 90 % d'une hauteur (H2) de la feuille de liège (2) et/ou de la hauteur de l'élément de fermeture (1), lesdites bandes s'étendant sur la même face (2a, 2b) sensiblement sur une extension longitudinale (L2) complète de la feuille de liège (2), perpendiculairement à la hauteur (H2) de la feuille de liège (2) et/ou à la hauteur de l'élément de fermeture (1), ou la couche de matériau isolant (7) étant fabriquée sur la feuille de liège (2) sous une forme d'au moins une bande dont une hauteur minimale est au moins égale à 10 mm ou au moins à 20 mm ou au moins à 30 mm ou au moins à 40 mm ou au moins à 50 mm, ladite bande s'étendant sensiblement sur une extension longitudinale (L2) complète de la feuille de liège (2), perpendiculairement à une hauteur (H2) de la feuille de liège (2) et/ou à la hauteur de l'élément de fermeture (1) ou la couche de matériau isolant (7) étant fabriquée sur la feuille de liège (2) sous une forme d'une pluralité de bandes dont une somme des hauteurs respectives est au moins égale à 10 mm ou au moins à 20 mm ou au moins à 30 mm ou au moins à 40 mm ou au moins à 50 mm, lesdites bandes s'étendant sur la même face (2a, 2b) sensiblement sur une extension longitudinale (L2) complète de la feuille de liège (2), perpendiculairement à la hauteur (H2) de la feuille de liège (2) et/ou à la hauteur de l'élément de fermeture (1).

6. Élément de fermeture selon l'une quelconque des revendications précédentes, dans lequel le matériau isolant est d'un type adhésif et/ou est configuré pour être appliqué à chaud ou appliqué à froid sur la feuille de liège (2).

7. Élément de fermeture selon l'une quelconque des revendications 1 à 5, dans lequel le matériau isolant est d'un type non adhésif.

8. Élément de fermeture selon l'une quelconque des revendications précédentes dans lequel l'élément de fermeture (1) comprend en outre au moins une couche additionnelle de colle (8) ou le matériau adhésif configuré pour fixer au moins une partie terminale externe de l'enroulement alterné de la feuille de liège (2) ou configuré pour la fixation de l'enroulement alterné sous une forme d'un élément de fermeture (1) ou configuré pour fixer la couche de matériau isolant (7) à la feuille de liège (2).

9. Élément de fermeture selon l'une quelconque des revendications précédentes, dans lequel le matériau isolant est une émulsion d'un copolymère ou une émulsion d'un copolymère d'acrylique ou une émulsion d'un copolymère de vinyle ou est une émulsion d'un copolymère d'acrylique-vinyle et/ou est un agent d'étanchéité et/ou est un agent de remplissage de surface et/ou un agent de formation de film et/ou un agent d'imprégnation et/ou est un hydrofuge et/ou un oléofuge.

10. Élément de fermeture selon l'une quelconque des revendications précédentes, dans lequel le matériau isolant est d'un type compatible pour l'utilisation avec des produits alimentaires selon les normes de référence existantes.

11. Élément de fermeture selon l'une quelconque des revendications précédentes, dans lequel la colle ou le matériau adhésif convient pour coller des surfaces poreuses et/ou est d'un type synthétique et/ou est d'un type thermofusible et/ou comprend une ou plusieurs parmi les matières premières suivantes : la résine d'hydrocarbure hydrogénée blanche ; la résine de penta-ester provenant d'érythritol ; le copolymère d'éthylène-acétate de vinyle (EVA) ; l'huile de synthèse naphténique ; l'huile minérale saturée de qualité pharmaceutique ; le polybutène.

12. Élément de fermeture selon l'une quelconque des revendications précédentes, dans lequel la feuille de liège (2) présente une épaisseur (S2) constante comprise entre 0,3 mm et 5 mm ou entre 0,5 mm et 5 mm ou la feuille de liège (2) ayant, dans au moins une partie de celle-ci, une épaisseur (S2) variable entre 0,3 mm et 5 mm ou entre 0,5 mm et 5 mm, l'épaisseur (S2) variant dans un sens parallèle à l'extension longitudinale (L2) de la feuille de liège (2) perpendiculairement à la hauteur (H2) de la feuille de liège (2) et/ou à la hauteur de l'élément de fermeture (1) et/ou la feuille de liège (2) ayant une épaisseur (S2) qui est variable dans un sens parallèle à l'extension longitudinale (L2) de la feuille de liège (2) perpendiculairement à la hauteur (H2) de la feuille de liège (2) et/ou à la hauteur de l'élément de fermeture (1), l'épaisseur (S2) étant minimale au moins au niveau d'une première extrémité (3) de la feuille de liège (2), destinée à être positionnée au centre de l'enroulement alterné, et/ou au moins à une seconde extrémité (4) de la feuille de liège (2) destinée à constituer une couche externe de l'enroulement alterné, et l'épaisseur (S2) étant maximale au moins à une partie de la feuille éloignée des extrémités (3, 4) de la feuille (2) destinée à constituer respectivement une partie centrale et une couche externe de l'enroulement alterné.

13. Élément de fermeture selon l'une quelconque des revendications précédentes, ayant un diamètre compris entre 15 et 40 mm ou entre 18 et 36 mm ou entre 22 et 34 mm et/ou ayant une hauteur comprise entre 20 et 70 mm ou entre 30 et 70 mm ou entre 40 et 60 mm.

14. Élément de fermeture selon l'une quelconque des revendications précédentes, dans lequel la feuille de liège (2) est constituée d'un liège d'origine naturelle solide ou d'un liège aggloméré ou de liège micro-aggloméré, ou d'un matériau isolant et/ou la feuille de liège (2) comprenant divers types de liège, par exemple du liège d'origine naturelle et du liège aggloméré ou du liège micro-aggloméré et/ou une première partie (6) de la feuille de liège (2) est constituée de liège aggloméré ou micro-aggloméré et une seconde partie (5) de la feuille de liège (2), fixée à la première partie (6), est constituée d'un liège d'origine naturelle solide et/ou une première partie (6) de la feuille de liège (2) destinée à constituer une partie centrale de l'élément de fermeture est constituée de liège aggloméré ou micro-aggloméré et une seconde partie (5) de la feuille de liège (2) destinée à constituer une couche externe de l'enroulement alterné est constituée de liège d'origine naturelle solide.

15. Procédé de fabrication d'un élément de fermeture selon la revendication 1, comprenant :
- la prédisposition d'une feuille de liège (2) ayant deux faces principales (2a, 2b) opposées l'une à l'autre,
- l'application d'une couche de matériau isolant (7), imperméable aux liquides et à l'air et/ou aux gaz, à la feuille de liège (2) afin d'au moins partiellement recouvrir au moins l'une desdites deux faces principales (2a, 2b) de la feuille de liège (2),
- l'enroulement de la feuille de liège (2) afin de définir ledit élément de fermeture (1) à l'aide d'un enroulement alterné de la feuille de liège (2) et la couche de matériau isolant (7), la couche de matériau isolant (7) et l'enroulement alterné étant configurés et prédisposés pour rendre l'élément de fermeture (1) imperméable aux liquides et à l'air et/ou aux gaz.
